# EUROPEAN PATENT APPLICATION

(11) **EP 4 733 919 A1**
(43) Date of publication of application: **29.04.2026**
(21) Application number: 25210741.2
(22) Date of filing: 23.10.2025
(51) Int. Cl.: G06F 3/04886, H04N 21/422

(54) **DISPLAY DEVICE AND SYSTEM INCLUDING THE SAME**

(30) Priority: 24.10.2024 KR 20240146740
(71) Applicant: LG Electronics Inc., Yeongdeungpo-gu Seoul 07336 (KR)
(72) Inventor: PARK, Jiho, Seoul (KR)
(74) Representative: Vossius & Partner Patentanwälte Rechtsanwälte mbB

(57) **Abstract**

A display device including a display; a network interface; and a controller configured to display an input window on the display for inputting information, display a virtual keyboard on the display for inputting information into the input window, receive an input signal from a first user terminal indicating activation of a virtual keypad on the first user terminal, in response to detecting the first user terminal being used to control the display device, disable display of the virtual keyboard on the display, receive a key code from the first user terminal through the network interface, the key code being converted to a selected key on the virtual keypad of the first user terminal, and display text in the input window displayed on the display corresponding to the received key code.

## Description

### CROSS-REFERENCE TO RELATED APPLICATIONS

This application claims priority to Korean Patent Application No. 10-2024-0146740, filed in the Republic of Korea on October 24, 2024, the entire contents of which are hereby expressly incorporated by reference into the present application.

### BACKGROUND

### Field of the Invention

The present disclosure relates to a display device and a system including the same, and more particularly, to a display device providing a function of controlling the display device using a user terminal, and a system including the same.

### Discussion of the Related Art

Internet of Things (IoT) technology refers to intelligent technologies and services that connect all objects based on the Internet, or a network, enabling information exchange between people and objects, as well as between objects themselves. Recently, the IoT technology has evolved into a smart home appliance platform that connects various electronic devices found in households such as display devices, refrigerators, washing machines, and air conditioners to a network, allowing users to remotely control each device or check an operating status thereof in real time.

A display device also display images for the user to view. For example, the display device includes televisions, monitors, and notebook computers, and so on, each of which is equipped with a liquid crystal display (LCD) using liquid crystals or an organic light-emitting diode (OLED) display.

Display devices such as smart TVs that have recently emerged can provide various services and functions in addition to broadcasting. To utilize these services or functions more effectively and enhance user operational convenience, remote control devices connected to display devices are evolving in various forms.

**In** the past, it was common for users to control display devices using remote control devices that utilized infrared (IR) signals; however, recent research has been actively conducted on methods of controlling display devices using user terminals to improve user convenience. In particular, when a user wants to input text into a display device, according to the conventional method, the display device displays a screen that includes a virtual keyboard, and the user must endure the inconvenience of selecting each key on the virtual keyboard using a pointer corresponding to the remote control device displayed on the screen.

**In** addition, when a user inputs text into a display device using a user terminal (mobile phone, UE, etc.), after entering text on the user terminal and triggering the transmission, the user terminal typically transmits a string including the entire input text to the display device. However, to modify the text entered into the display device, the user must re-enter the entire text into the user terminal, and there is a challenge in recommending keywords related to the text entered by the user in real time.

Additionally, the user terminal cancan be configured to transmit to the display device a string of the entire text entered each time the user enters text into the user terminal. However, as the amount of text entered by the user increases, the amount of data required for transmitting the text also increases, leading to slower transmission speeds.

### SUMMARY

Accordingly, one object of the present disclosure is directed to addressing the above-mentioned and other problems.

To achieve these and other advantages and in accordance with the purpose of the present invention, as embodied and broadly described herein, the present invention provides in one aspect a display device including a function for inputting text into the display device using a user terminal, and a system including the display device.

In another aspect, the present disclosure provides a display device for easily modifying text displayed on the display device based on an input received from a user terminal, and a system including the display device.

The present disclosure also provides a display device for minimizing an amount of data used for inputting text, and a system including the display device.

The present disclosure also provides a display device for preventing content displayed on a screen of the display device from being covered by a virtual keyboard when text is input using a user terminal, and a system including the display device.

The present disclosure also provides a display device for, in response to interruption of inputting text using a user terminal, displaying a screen including a virtual keyboard to continue text input, and a system including the display device.

The present disclosure also provides a display device for guiding a user to use an optimal user terminal for text entry, and a system including the display device.

In another aspect, the present disclosure provides a display device including a display; a network interface; and a controller. The controller is configured to in response to activation of a virtual input interface, disable output of a virtual keyboard through the display; while the virtual input interface activated, receive a key code from a specific user terminal through the network interface; and display text through the display based on a string corresponding to the received key code.

In another aspect, a system including a display device and at least one user terminal is provided. The display device is configured to: in response to activation of a virtual input interface, disabling output of a virtual keyboard through a first display of the display device; while the virtual input interface is activated, receive a key code from a specific user terminal; and display text through the first display based on a string corresponding to the received key code. The specific user terminal is configured to: output the virtual keyboard through a second display device of the specific user terminal; and transmit the key code corresponding to a key included in the virtual keyboard to the display device.

The effects of the display device and the system including the same according to the present disclosure are described as follows.

That is, the display device provides a function for inputting text into a display device using a user terminal, making it possible to easily modify text displayed on a display device based on an input received from a user terminal and minimizing an amount of data used for text entry.

The present disclosure also prevents content displayed on a screen of a display device from being covered by a virtual keyboard when text is input using a user terminal, and in response to interruption of inputting text using a user terminal, it is possible for a display device to display a screen including a virtual keyboard to continue text input. The present disclosure also provides a display device guides a user to use an optimal user terminal for text entry, and a system including the display device.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1 is a block diagram of a display device according to an embodiment of the present disclosure.
FIG. 2 is a block diagram of a remote control device according to an embodiment of the present disclosure.
FIG. 3 is a drawing showing an example of a configuration of a remote control device according to an embodiment of the present disclosure.
FIG. 4 is a diagram showing an example of utilizing a remote control device according to an embodiment of the present disclosure.
FIG. 5 is a diagram illustrating a webOS architecture according to an embodiment of the present disclosure.
FIG. 6 is a diagram illustrating the architecture of a webOS device according to an embodiment of the present disclosure.
FIG. 7 is a diagram for explaining a graphic composition flow in a webOS device according to an embodiment of the present disclosure.
FIG. 8 is a diagram showing an example of a configuration of a system according to an embodiment of the present disclosure.
FIGS. 9 to 12 are flowcharts illustrating a method of operating a display device according to an embodiment of the present disclosure.
FIGS. 13A to 21 are drawings referenced in the description of inputting text using a virtual keyboard according to embodiments of the present disclosure.

### DETAILED DESCRIPTION

Hereinafter, the present disclosure will be described in detail with reference to the drawings. In the drawings, in order to clearly and briefly describe embodiments of the present disclosure, the illustration of parts irrelevant to the description is omitted, and the same reference numerals are used for the same or extremely similar parts throughout the specification.

Hereinafter, the suffixes "module" and "unit" of elements herein are used for convenience of description and thus can be used interchangeably and do not have any distinguishable meanings or functions. Thus, the terms "module" and "unit" can be interchangeably used.

It should be noted that the terms "comprise", "include", or "have" as used in the present disclosure are intended to denote the existence of any features, numerical values, steps, operations, constituent elements, parts, and combinations thereof described in the specification, but are not intended to preliminarily exclude the possibility of existence or addition of any one or more other features, numerical values, steps, operations, constituent elements, parts, and combinations thereof. It will be understood that, although the terms first, second, etc. can be used herein to describe various elements, these elements should not be limited by these terms. These terms are only used to distinguish one element from another.

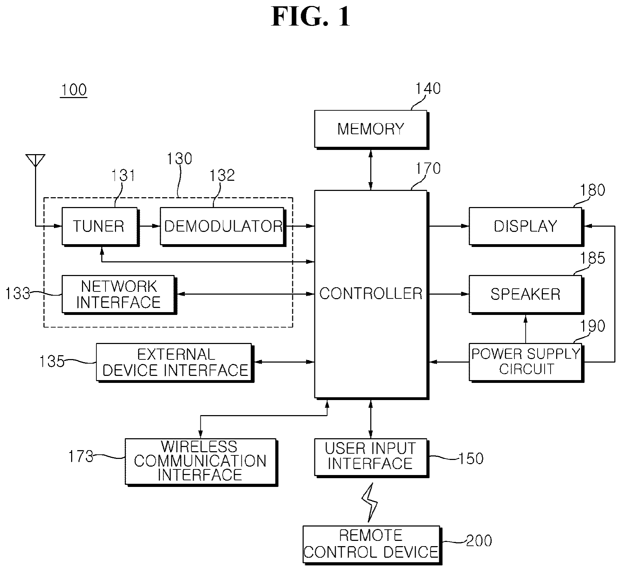

[x]FIG. 1 is a block diagram of a display device according to an embodiment of the present disclosure. Referring to FIG. 1, a display device 100 can include a broadcast receiver 130, an external device interface 135, a memory 140, a user input interface 150, a controller 170, a wireless communication interface 173, a display 180, a speaker 185, and a power supply circuit 190.

The broadcast receiver 130 can include a tuner 131, a demodulator 132, and a network interface 133. The tuner 131 can select a specific broadcast channel according to a channel selection command. The tuner 131 can receive a broadcast signal for a specific tuned broadcast channel. The demodulator 132 can separate a received broadcast signal into a video signal, an audio signal, and a data signal related to a broadcast program, and can restore the separated video signal, audio signal, and data signal into a form that can be output. The external device interface 135 can receive an application or a list of applications within an adjacent external device and transmit them to the controller 170 or memory 140.

The external device interface 135 can provide a connection path between the display device 100 and an external device. The external device interface 135 can receive one or more of images and audio output from the external device connected wirelessly or wired to the display device 100 and transmit the received images or audio to the controller 170. The external device interface 135 can include a plurality of external input terminals. The plurality of external input terminals can include an RGB terminal, one or more High Definition Multimedia Interface (HDMI ) terminals, and a component terminal.

A video signal from the external device input through the external device interface 135 can be output on the display 180. The voice signal from the external device input through the external device interface 135 can be output on the speaker 185. The external device that can be connected to the external device interface 135 can be any one of a set-top box, a Blu-ray player, a DVD player, a game console, a sound bar, a smartphone, a PC, a USB memory, and a home theater, but these are only examples.

The network interface 133 can provide an interface for linking the display device 100 to a wired/wireless network, including the Internet. The network interface 133 can transmit or receive data to or from other users or other electronic devices via the connected network or another network linked to the connected network. In addition, some of the content data stored in the display device 100 can be transmitted to a selected user or electronic device from among other pre-registered users or devices in the display device 100.

The network interface 133 can access a given web page through the connected network or another network linked to the connected network. That is, it is possible to access a specific web page through a network and send or receive data to or from the server. In addition, the network interface 133 can receive content or data provided by a content provider or network operator. That is, the network interface 133 can receive content such as movies, advertisements, games, VOD, broadcast signals, etc., and related information from a content provider or network provider through a network.

In addition, the network interface 133 can receive firmware update information and update files provided by the network operator, and transmit data to the Internet or content provider or network operator. The network interface 133 can select and receive a desired application from among applications open to the public via a network.

The memory 140 can store programs for signal processing and control within the controller 170 and can store processed image, voice, or data signals. In addition, the memory 140 can perform a function for of temporarily storing image, voice, or data signals input from an external device interface 135 or the network interface 133, and can also store information about a specific image through a channel memory function.

The memory 140 can store an application or a list of applications input from the external device interface 135 or the network interface 133. The display device 100 can play content files (video files, still image files, music files, document files, application files, etc.) stored in the memory 140 and provide these files to the user.

The user input interface 150 can transmit a signal input by a user to the controller 170 or transmit a signal from the controller 170 to the user. For example, the user input interface 150 can receive and process control signals such as power on/off, channel selection, and screen settings from a remote control device 200 according to various communication methods, such as Bluetooth, Ultra-Wideband (WB), ZigBee, RF (Radio Frequency) communication, or IR communication, or can process control signals from the controller 170 to be transmitted to the remote control device 200. In addition, the user input interface 150 can transmit control signals input from local keys (not shown) such as the power key, channel key, volume key, and settings to the controller 170.

An image signal processed in the controller 170 can be input to the display 180 and displayed as an image corresponding to the image signal. In addition, the image signal processed in the controller 170 can be input to an external output device through the external device interface 135. The voice signal processed in the controller 170 can be output as audio to the speaker 185. In addition, the voice signal processed in the controller 170 can be input to the external output device through the external device interface 135.

In addition, the controller 170 controls the overall operation within the display device 100. In addition, the controller 170 can control the display device 100 by a user command or an internal program input through the user input interface 150, and can connect to a network to allow the user to download a desired application or application list into the display device 100.

The controller 170 can enable user-selected channel information, etc. to be output on the display 180 or speaker 185 together with the processed video or voice signal. In addition, the controller 170 can allow a video signal or voice signal from an external device, for example, a camera or camcorder, input through the external device interface 135 to be output on the display 180 or speaker 185 in accordance with an external device video playback command received through the user input interface 150.

Meanwhile, the controller 170 can control the display 180 so that an image, for example, a broadcast image input through the tuner 131, an external input image input through the external device interface 135, an image input through a network interface, or an image stored in a memory 140 can be displayed on the display 180. In this case, the image displayed on the display 180 can be a still image or a moving image, and can be a 2D image or a 3D image.

In addition, the controller 170 can control the playback of content stored in the display device 100, received broadcast content, or external input content input from the outside, and such content can be in various forms such as broadcast images, external input images, audio files, still images, connected web screens, and document files.

The wireless communication interface 173 can communicate with an external device via wired or wireless communication. The wireless communication interface 173 can perform short range communication with the external device. To this end, the wireless communication interface 173 can support short-range communication using at least one of Bluetooth^{™}, Radio Frequency Identification (RFID), Infrared Data Association (IrDA), Ultra-Wideband (UWB), ZigBee, Near Field Communication (NFC), Wireless-Fidelity (Wi-Fi), Wi-Fi Direct, and Wireless USB (Wireless Universal Serial Bus) technologies. Via wireless area networks, the wireless communication interface 173 can support wireless communication between the display device 100 and a wireless communication system, between the display device 100 and another display device 100, or between the display device 100 and a network where the display device 100 (or an external server) is located. The Wireless Area Networks can be Wireless Personal Area Networks.

Here, another display device 100 can be a wearable device (e.g., a smartwatch, smart glasses, or a head-mounted display (HMD)) or a mobile terminal, such as a smartphone, that can exchange data with (or be linked to) the display device 100 according to the present disclosure. The wireless communication interface 173 can detect (or recognize) a wearable device capable of communication around the display device 100.

Furthermore, when the detected wearable device is a device authenticated to communicate with the display device 100 according to the present disclosure, the controller 170 can transmit at least a portion of data processed in the display device 100 to the wearable device via the wireless communication interface 173. Therefore, a user of a wearable device can use data processed in the display device 100 through the wearable device.

The display 180 can generate a driving signal by converting an image signal, data signal, OSD signal processed by the controller 170 or an image signal, data signal, etc. received from an external device interface 135 into R, G, and B signals. Meanwhile, the display device 100 illustrated in FIG. 1 is only one embodiment of the present disclosure, so some of the illustrated components can be integrated, added, or omitted depending on the specifications of the display device 100 to be actually implemented.

That is, two or more components can be combined into one component, or one component can be divided into two or more components, as needed. In addition, a function performed in each block is intended to explain an embodiment of the present disclosure, and the specific operation or device thereof do not limit the scope of the present disclosure.

According to another embodiment of the present disclosure, unlike as illustrated in FIG. 1, the display device 100 can receive and play back an image through the network interface 133 or the external device interface 135, without having the tuner 131 and the demodulator 132 .

For example, the display device 100 can be implemented separately as an image processing device, such as a set-top box for receiving content from broadcast signals or various network services, and as a content playback device for playing content input from the image processing device. In this case, an operation method of a display device according to an embodiment of the present disclosure to be described below can be performed by any one of the display device 100 described with reference to FIG. 1, as well as an image processing device such as the separated set-top box, or a content playback device having the display 180 and the speaker 185.

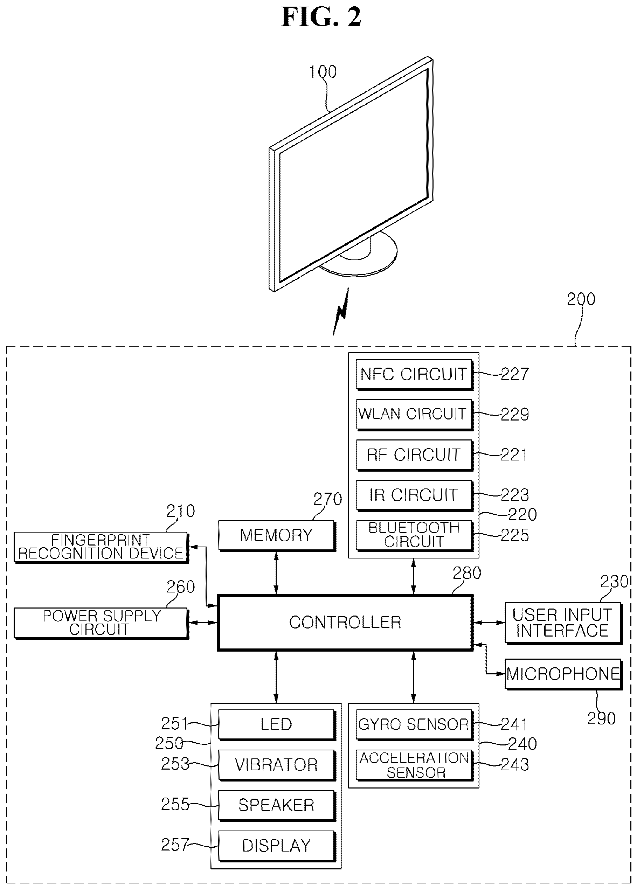

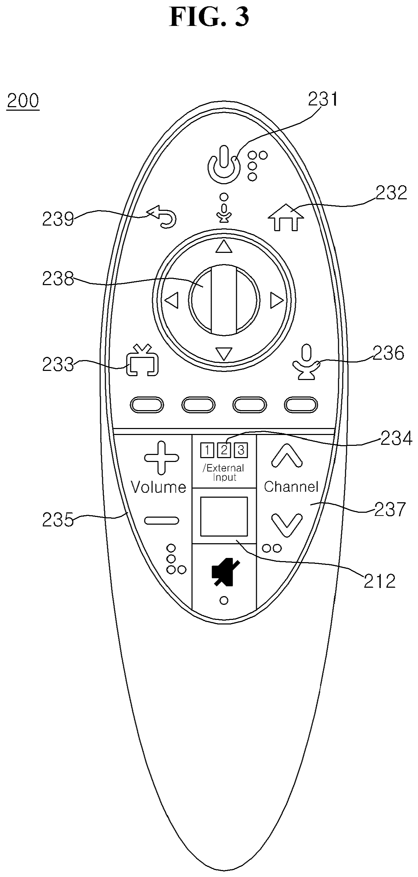

Next, a remote control device according to an embodiment of the present disclosure will be described with reference to FIGS. 2 and 3. FIG. 2 is a block diagram of a remote control device according to an embodiment of the present disclosure, and FIG. 3 is a drawing showing an example of a configuration of a remote control device according to an embodiment of the present disclosure.

First, referring to FIG. 2, the remote control device 200 can include a fingerprint recognition device 210, a wireless communication circuit 220, a user input interface 230, a sensor 240, an output interface 250, a power supply circuit 260, a memory 270, a controller 280, and a microphone 290. As shown in FIG. 2, the wireless communication circuit 220 transmits and receives signals with any one of display devices according to embodiments of the present disclosure described above.

The remote control device 200 can include an RF circuit 221 capable of transmitting and receiving signals with a display device 100 in accordance with RF communication standards, and can include an IR circuit 223 capable of transmitting and receiving signals with the display device 100 in accordance with IR communication standards. In addition, the remote control device 200 can include a Bluetooth circuit 225 capable of transmitting and receiving signals with the display device 100 according to Bluetooth communication standards. In addition, the remote control device 200 can include an NFC circuit 227 capable of transmitting and receiving signals with the display device 100 according to Near Field Communication (NFC) communication standards, and can include a WLAN circuit 229 capable of transmitting and receiving signals with the display device 100 according to Wireless LAN (WLAN) communication standards.

In addition, the remote control device 200 transmits a signal containing information about movement of the remote control device 200 to the display device 100 through the wireless communication circuit 220. Meanwhile, the remote control device 200 can receive a signal transmitted by the display device 100 through the RF circuit 221. If necessary, the remote control device 200 can transmit commands for turning the power on/off, changing the channel, adjusting the volume, and so on to the display device 100 through the IR circuit 223.

The user input interface 230 can be composed of a keypad, a button, a touch pad, or a touch screen. A user can input a command related to the display device 100 to the remote control device 200 by operating the user input interface 230. When the user input interface 230 is equipped with a hard key button, the user can input a command related to the display device 100 to the remote control device 200 by pushing the hard key button. This will be explained with reference to FIG. 3.

Referring to FIG. 3, the remote control device 200 can include a plurality of buttons. The plurality of buttons can include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 can be a button for recognizing a user's fingerprint. In one embodiment, the fingerprint recognition button 212 can perform a push operation and can receive a push operation and a fingerprint recognition operation.

The power button 231 can be a button for turning the power of the display device 100 on/off. The home button 232 can be a button for moving to the home screen of the display device 100. The live button 233 can be a button for displaying a real-time broadcast program.

The external input button 234 can be a button for receiving an external input connected to the display device 100. The volume control button 235 can be a button for adjusting the volume output by the display device 100. The voice recognition button 236 can be a button for receiving a user's voice and recognizing the received voice. The channel change button 237 can be a button for receiving a broadcast signal of a specific broadcast channel. The OK button 238 can be a button for selecting a specific function, and the back button 239 can be a button for returning to a previous screen.

Again, FIG. 2 is described. When the user input interface 230 has a touch screen, a user can input a command related to the display device 100 using the remote control device 200 by touching a soft key of the touch screen. In addition, the user input interface 230 can include various types of input means that can be operated by a user, such as a scroll key or a jog key, and this embodiment does not limit the scope of the present disclosure.

The sensor 240 can include a gyro sensor 241 or an acceleration sensor 243, and the gyro sensor 241 can sense information about the movement of the remote control device 200. For example, the gyro sensor 241 can sense information about an operation of the remote control device 200 based on the X, Y, and X axes, and the acceleration sensor 243 can sense information about a movement speed of the remote control device 200. Meanwhile, the remote control device 200 can further include a distance measuring sensor, so as to sense a distance to a display 180 of the display device 100.

The output interface 250 can output a video or voice signal corresponding to an operation of the user input interface 230 or a signal transmitted from the display device 100. Through the output interface 250, the user can recognize whether the user input interface 230 is being operated or whether the display device 100 is being controlled.

For example, the output interface 250 can include an LED 251, a vibrator 253, a speaker 255, or a display 257. When the user input interface 230 is operated or when a signal is transmitted and received concerning the display device 100 via the wireless communication circuit 220, the LED 251 can light up, the vibrator 253 can generate vibrations, the speaker 255 can output sound, or the display 257 can output an image.

In addition, the power supply circuit 260 can supply power to the remote control device 200. When the remote control device 200 does not move for a predetermined period of time, the power supply circuit 260 can stop power supply, thereby reducing power waste.

When a predetermined key provided in the remote control device 200 is operated, the power supply circuit 260 can resume power supply. The memory 270 can store various types of programs, application data, and so on required to control or operate the remote control device 200. When the remote control device 200 wirelessly transmits and receives signals through the display device 100 and the RF circuit 221, the remote control device 200 and the display device 100 transmit and receive the signals through a predetermined frequency band.

The controller 280 of the remote control device 200 can store and reference information about a frequency band and the like, which are necessary for wireless transmission and reception of signals concerning the display device 100 paired with the remote control device 200, in the memory 270. The controller 280 controls all matters related to controlling the remote control device 200. The controller 280 can transmit a signal corresponding to a predetermined key operation of the user input interface 230 or a signal corresponding to a movement of the remote control device 200 sensed by the sensor 240 to the display device 100 through the wireless communication circuit 220.

In addition, the microphone 290 of the remote control device 200 can acquire voice. The microphone 290 can be provided in plural.

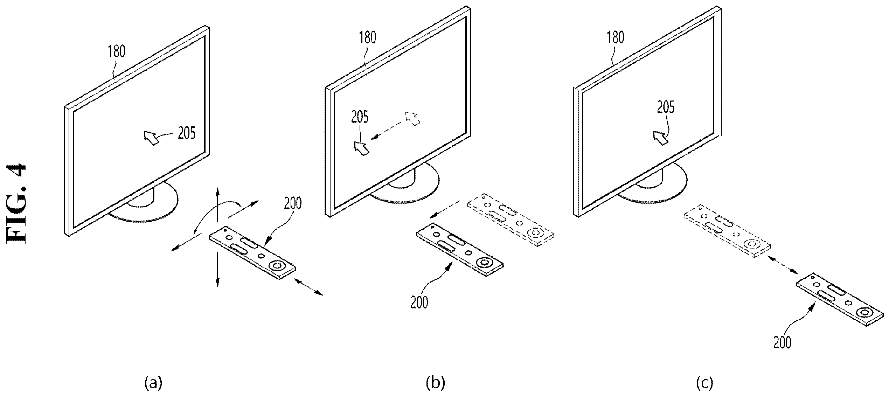

Next, FIG. 4 will be described. In particular, FIG. 4 shows an example of utilizing a remote control device according to an embodiment of the present disclosure. That is, FIG. 4(a) illustrates that a pointer 205 corresponding to a remote control device 200 is displayed on a display 180.

A user can move or rotate the remote control device 200 up, down, left, or right. The pointer 205 displayed on the display 180 of the display device 100 corresponds to a movement of the remote control device 200. This remote control device 200 can be referred to as a space remote controller because, as shown in FIG. 4, the pointer 205 moves according to a movement of the remote control device 200 in 3D space.

FIG. 4(b) shows an example where when a user moves the remote control device 200 to the left, the pointer 205 displayed on the display 180 of the display device 100 also moves to the left accordingly. Information about a movement of the remote control device 200 detected through a sensor of the remote control device 200 is transmitted to the display device 100. The display device 100 can calculate coordinates of the pointer 205 based on the information about the movement of the remote control device 200. The display device 100 can display the pointer 205 corresponding to the calculated coordinates.

FIG. 4(c) shows an example where a user moves the remote control device 200 away from the display 180 while pressing a specific button in the remote control device 200. As a result, a selected area within the display 180 corresponding to the pointer 205 can be zoomed in and displayed in an enlarged format.

Conversely, when the user moves the remote control device 200 closer to the display 180, the selected area within the display 180 corresponding to the pointer 205 can be zoomed out and displayed in a reduced format. Meanwhile, when the remote control device 200 moves away from the display 180, the selected area can be zoomed out, and when the remote control device 200 moves closer to the display 180, the selected area can be zoomed in. In addition, up, down, left, and right movements may not be recognized while a specific button in the remote control device 200 is pressed. That is, when the remote control device 200 moves away from or toward the display 180, the up, down, left, and right movements are not recognized, and only the forward and backward movements are recognized. While a specific button on the remote control device 200 is not pressed, only the pointer 205 moves according to the up, down, left, and right movements of the remote control device 200.

Meanwhile, a movement speed or movement direction of the pointer 205 can correspond to a movement speed or movement direction of the remote control device 200. Meanwhile, a pointer in this specification refers to an object displayed on the display 180 in response to an operation of the remote control device 200. Therefore, the pointer 205 can be any object of various shapes as well as the arrow-shaped object shown in FIG. 4. For example, the pointer 205 can be a point, a cursor, a prompt, a thick outline, etc. In addition, the pointer 205 can be displayed corresponding to one point of the horizontal or vertical axis on the display 180, and can also be displayed corresponding to multiple points such as lines or surfaces.

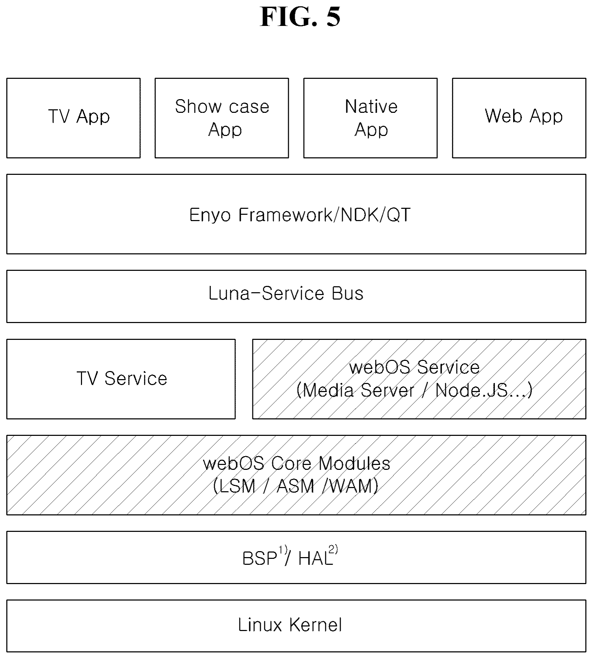

FIG. 5 is a diagram illustrating a webOS architecture according to an embodiment of the present disclosure. Referring to FIG. 5, the architecture of a webOS platform will be described as follows.

The platform can be largely divided into a kernel, a Web OS core platform based on a system library, an application, a service, etc. The architecture of the Web OS platform can have a layered structure, with the OS at the lowest layer, system libraries at the next layer, and applications at the highest layer." First, the lowest layer is an OS layer including a Linux kernel such that Linux is included as an OS of the digital device.

At layers higher than the OS layer, a board support package (BSP)/hardware abstraction layer (HAL) layer, a Web OS core modules layer, a service layer, a Luna-service bus layer and an Enyo framework/native developer's kit (NDK)/QT layer are sequentially provided. At the highest layer, an application layer is provided.

Meanwhile, one or more layers of the above-described Web OS layered structure can be omitted and a plurality of layers can be combined to one layer and one layer can be divided into a plurality of layers. The WebOS core module layer can include a Luna surface manager (LSM) for managing a surface window, etc., a system & application manager (SAM) for managing execution and performance status of applications, etc., and a web application manager (WAM) for managing web applications based on WebKit.

The LSM can manage an application window displayed on a screen. The LSM can control display hardware (HW) and provide a buffer for rendering content necessary for applications, and compose and output results of rendering a plurality of applications on a screen. The SAM can manage policy according to several conditions of systems and applications. The WAM can be based on Enyo framework, because a WebOS regards a web application as a basic application.

An application can use a service via a Luna-service bus. A service can be newly registered via a bus and the application can detect and use a desired service. The service layer can include services having various service levels, such as a TV service, a Web OS service, etc. The Web OS service can include a media server, Node.JS, etc. and, in particular, the Node.JS service can support JavaScript, for example.

The webOS services can communicate via the bus with Linux processes that implement function logic. The webOS services can be largely divided into four parts, including: services which are migrated from TV processes and existing TVs to webOS or which are manufacturer-differentiated services; webOS common services; and Node.js services developed in JavaScript and used through Node.js.

The application layer can include all applications supportable by a digital device, such as a TV application, a showcase application, a native application, a web application, etc. Applications on the Web OS can be divided into a web application, a palm development kit (PDK) application, a Qt Meta Language or Qt Modeling Language (QML) application, etc. according to implementation methods.

The web application is based on a WebKit engine and is performed on WAM runtime. Such a web application can be based on Enyo framework or can be developed and performed based on general HTML5, cascading style sheets (CSS) and Javascripts. The PDK application can include a native application developed with C/C++ based on a PDK provided for a third party or an external developer. The PDK can refer to a set of development libraries and tools provided to enable a third party to develop a native application (C/C++) such as games. For example, the PDK application can be used to develop applications requiring high performance.

The QML application is a native application based on Qt and can include basic applications provided along with the Web OS platform, such as card view, home dashboard, virtual keyboard, etc. QML can be a markup language of a script format, not C++. The native application is an application which is developed and compiled using C/C++ executed in binary form, and such a native application has an advantage such as high execution speed.

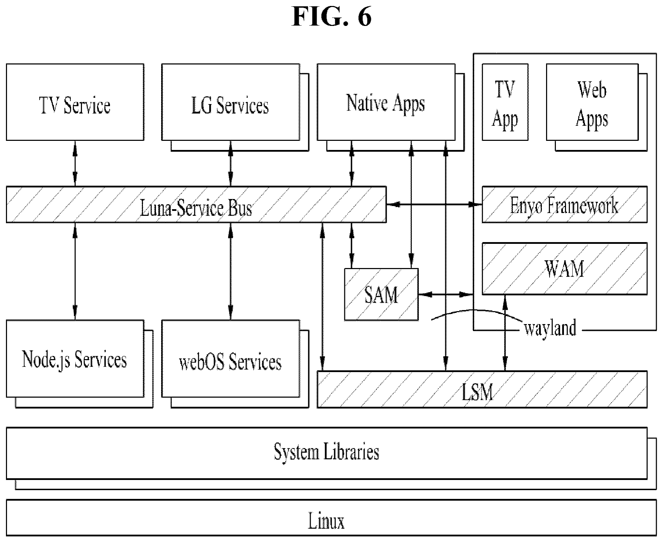

FIG. 6 is a diagram illustrating the architecture of a webOS device according to an embodiment of the present disclosure. FIG. 6 is a block diagram based on the runtime of a webOS device, which can be understood with reference to the layered structure of FIG. 5. Hereinafter, an explanation will be given with reference to FIGS. 5 and 6.

Referring to FIG. 6, services, applications, and webOS core modules are integrated with the system OS (Linux) and system libraries, and communication therebetween can be performed via the Luna service bus.

Node.js services based on HTML5, CSS, and JavaScript, such as email, contacts, and calendar; webOS services like logging, backup, file notifications, databases, activity manager, system policy, AudioD (Audio Daemon), updates, and media server; TV services including EPG (Electronic Program Guide), PVR (Personal Video Recorder), and data broadcasting; CP services like voice recognition, Now On, notifications, search, ACR (Auto Content Recognition), CBOX (Contents List Browser), wfdd, DMR, Remote Applications, downloads, and SDPIF (Sony Philips Digital Interface Format); native applications including PDK applications, browsers, and QML applications; and UI-related TV applications and web applications based on the Enyo Framework can all be processed through the webOS core modules, such as SAM, WAM, and LSM mentioned above, via the Luna service bus. Meanwhile, the TV applications and web applications can not necessarily be based on the Enyo framework or can not be UI-related.

CBOX can manage lists and metadata of content from external devices connected to the TV, such as USB, DLNA, and cloud storage. Meanwhile, CBOX can output content listings from various content containers, such as USB, DMS, DVR, and cloud, as an integrated view. Furthermore, CBOX can display listings of various types of content, such as pictures, music, and videos, and manage metadata thereof. Moreover, CBOX can output the contents of attached storage in real-time. For example, CBOX can immediately output a list of contents of a connected storage device, such as a USB, as soon as the storage device is plugged in. At this point, a standardized method for handling content listings can also be defined. Additionally, CBOX can accommodate various connection protocols.

SAM can aim to improve module complexity and enhance scalability. For example, the existing system manager performs multiple functions-such as managing the system UI, window management, web application runtime, and handling UX constraints-in a single process, leading to high implementation complexity. The complexity can be reduced by separating core functions and clarifying the interfaces between the functions.

LSM can support the independent development and integration of system UX implementations such as card views and launchers, and can easily respond to changes in product requirements. Meanwhile, LSM can enable multi-tasking by maximizing hardware resources when compositing multiple application screens, such as App-on-App, and can provide a window management mechanism for multi-window and 21:9 displays.

LSM can support the implementation of system UI based on QML and can improve development productivity. QML UX is based on the MVC architecture, making it easy to compose a view with screen layouts and UI components, as well as to develop code for processing user input. Meanwhile, an interface between QML and webOS components is established through QML extension plug-ins, while the application's graphic operations can rely on the Wayland protocol and Luna service calls.

As mentioned above, the LSM is an abbreviation for a Luna surface manager and functions as an application window compositor. The LSM allows independently developed applications, UI components, etc. to be composited and output on the screen. In this context, when components such as the Recents application, Showcase application, and Launcher application render respective content, LSM can define an output area, a linkage method, etc. as a compositor. In other words, the LSM functioning as a compositor handle graphic composition, focus management, input events, etc. At this point, the LSM receives events and focus information from an input manager, which can include a remote controller, a HID (Human Interface Devices) such as a mouse and keyboard, a joystick, a game pad, a remote application, a pen touch, etc.

In this way, the LSM can support multiple window models and can be simultaneously executed in all applications as a system UI. The LSM can support launcher, Recents, setting, notification, system keyboard, volume UI, search, finger gesture, voice recognition (speech to text (STT), text to speech (TTS), natural language processing (NLP), etc.), pattern gesture (camera or mobile radio control unit (MRCU)), live menu, ACR, etc.

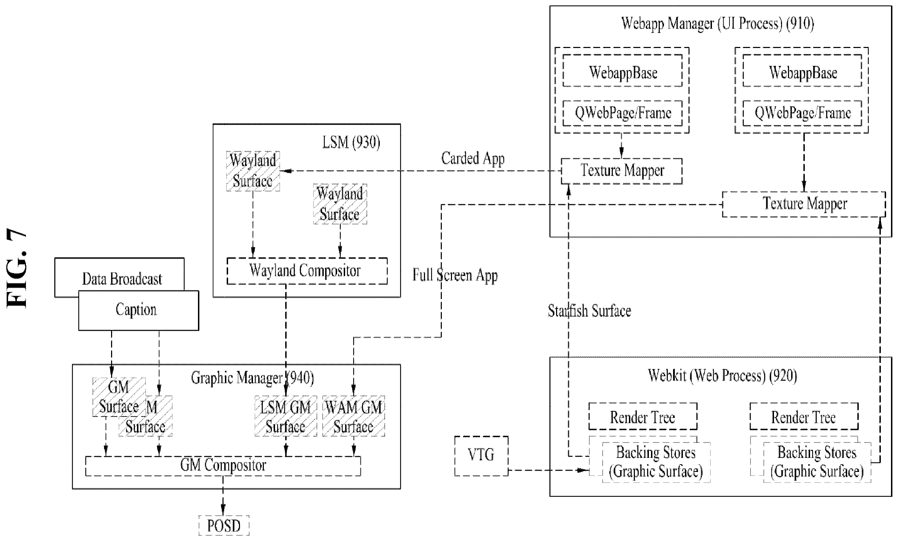

FIG. 7 is a diagram for explaining a graphic composition flow in a webOS device according to an embodiment of the present disclosure. Referring to FIG. 7, graphic composition processing can be performed via a web application manager 910 functioning as a UI process, a WebKit 920 functioning as a web process, an LSM 930 and a graphics manager (GM) 940.

When the web application manager 910 generates web application based graphics data (or application) as a UI process, the generated graphics data can be delivered to the LSM if the graphics data is not a full-screen application. The web application manager 910 can receive an application generated by the WebKit 920 in order to share a graphic processing unit (GPU) memory for graphic management between the UI process and the web process and deliver the application to the LSM 930 if the application is not a full-screen application. If the application is a full-screen application, the LSM 930 can bypass the application. In this case, the application can be directly delivered to the graphics manager 940.

The LSM 930 can transmit the received UI application to a Wayland compositor via a Wayland surface and the Wayland compositor appropriately processes the UI application and deliver the processed UI application to the graphics manager. The graphics data received from the LSM 930 can be delivered to the graphics manager compositor via the LSM GM surface of the graphics manager 940, for example.

The full-screen application can be directly delivered to the graphics manager 940 without passing through the LSM 930 as described above, and then be processed in the graphics manager compositor via the WAM GM surface. The graphics manager can process and output all graphics data in the Web OS device and receive and output data passing through the above-described LSM GM surface, data passing through a WAM GM surface, and graphics data passing through a GM surface, such as a data broadcasting application or a caption application, on a screen. Here, the function of the GM compositor can be equal or similar to that of the aforementioned compositor.

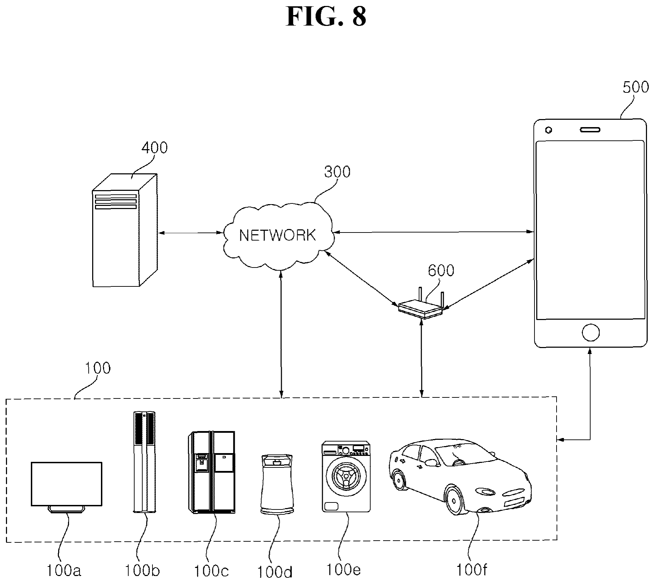

FIG. 8 is a diagram showing an example of a configuration of a system according to an embodiment of the present disclosure. Referring to FIG. 8, a system can include an electronic device 100, a server 400, and/or a user terminal 500. The system can further include a router 600.

The electronic device 100 can include a display device 100a, an air conditioner 100b, a refrigerator 100c, an air purifier 100d, a washing machine 100e, a vehicle 100f, etc. In this disclosure, the electronic device 100 will be described as an example where the electronic device 100 is the display device 100a, but the present disclosure is not limited thereto.

The electronic device 100 can transmit and receive signals concerning the server 400, the user terminal 500, and/or the router 600. For example, an electronic device 100 can transmit and receive data concerning at least one server 400 via a network 300 such as the Internet.

An application (hereinafter, a remote control application) used for remote control of the electronic device 100 can be installed on the user terminal 500. The remote control application can be installed on the electronic device 100. The electronic device 100 and the user terminal 500 can transmit and receive remote control signals to through a remote control application.

The electronic device 100 can transmit a remote control signal to the server 400 via the router 600, and can receive a remote control signal from the server 400 via the router 600. In addition, the router 600 can be connected to a communication line installed in a place such as a home or office to transmit signals. The electronic device 100 can be located within a range where signals from the router 600 can be received.

The router 600 can receive a signal transmitted from the electronic device 100 and a user terminal 500 connected to the router 600 and transmit the signal to the outside through a communication line. The router 600 can also convert a signal received from the outside through a communication line into a wireless signal and transmit the wireless signal. By doing so, the electronic device 100 connected to the router 600 can communicate with the server 400.

According to an embodiment, when remotely controlling the electronic device 100 through the user terminal 500, a signal transmitted from the user terminal 500 can be transmitted to the electronic device 100 via the server 400 and/or the router 600. The electronic device 100 can transmit a remote control signal to the user terminal 500 via the router 600 and/or the server 400. Meanwhile, if a communication protocol (e.g., Bluetooth, Wi-Fi, etc.) is provided to the electronic device 100 in the system, one-to-one communication between the electronic device 100 and the user terminal 500 can also be possible.

The electronic device 100 can operate in remote control mode in response to remote control being performed using the user terminal 500. Meanwhile, the electronic device 100 can terminate the remote control mode in response to the termination of remote control using the user terminal 500.

The electronic device 100 can receive a control signal from the user terminal 500 in the remote control mode. Meanwhile, the electronic device 100 can receive a control signal from the remote control device 200 in the remote control mode.

According to an embodiment, a plurality of user terminals 500 can be used simultaneously for remote control of the electronic device 100. For example, while the plurality of user terminals 500 are connected to a local area network via the router 600, remote control of the electronic device 100 can be performed through the plurality of user terminals 500 by executing a remote control application.

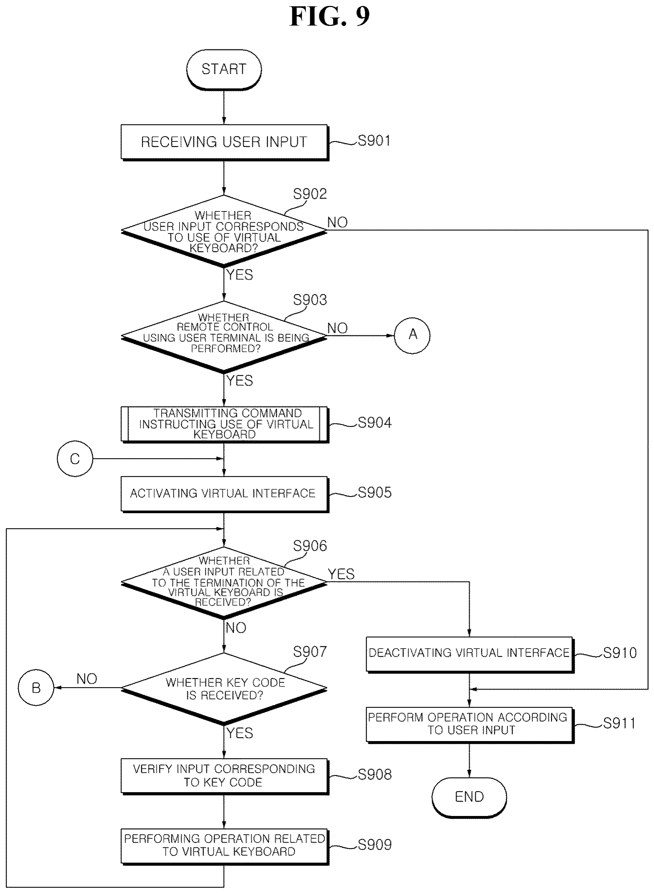

FIGS. 9 to 12 are flowcharts illustrating a method of operating a display device according to an embodiment of the present disclosure. Referring to FIG. 9, a display device 100 can receive a user input in operation S901. For example, the display device 100 can receive a user input from a remote control device 200 through a user input interface 150. For example, the display device 100 can receive a user input from the user terminal 500 via a network interface 133.

In operation S902, the display device 100 can determine whether the received user input corresponds to use of a virtual keyboard. The virtual keyboard can be a software component that allows the input of characters without the need for physical keys. The virtual keyboard can include multiple keys, each representing a different character.

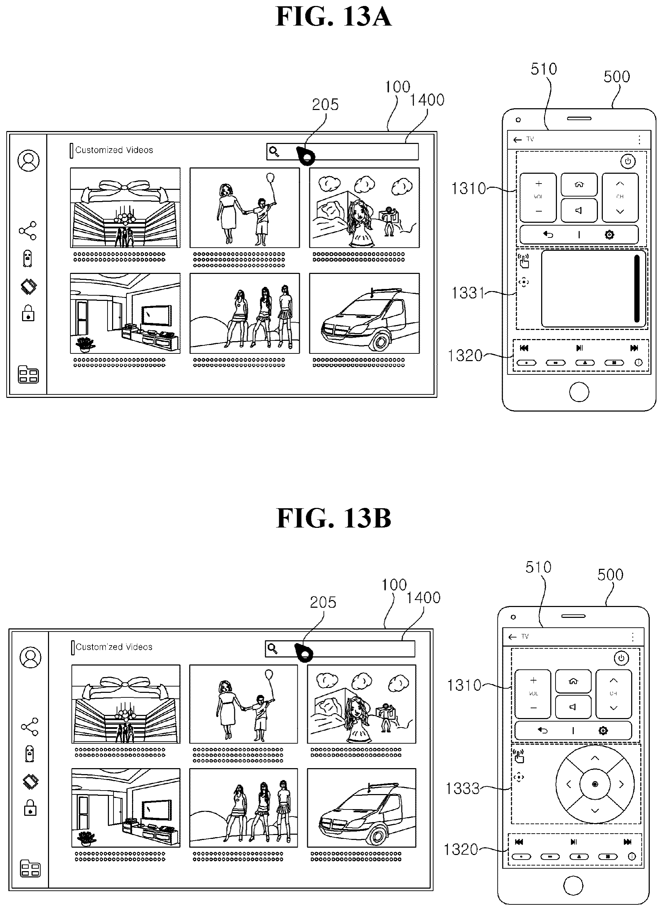

Referring to FIGS. 13A and 13B, a display device 100 can output a content-related screen through a display 180. A user terminal 500 can output a remote control screen through a display 510 in response to the execution of a remote control application for remotely controlling the display device 100.

The remote control screen, which is output on the display 510 of the user terminal 500, can include various objects 1310, 1320, 1331, and 1333 corresponding to a keypad, buttons, touch pad, and so on, which are included in the remote control device 200. In response to receiving a user input for selecting an object included in the remote control screen, the user terminal 500 can transmit a control signal corresponding to the selected object to the display device 100.

The display device 100 can perform an operation according to the control signal received from the user terminal 500. For example, when an input for selecting a channel button included in a first object 1310 is received, the user terminal 500 can transmit a control signal corresponding to the channel change button 237 to the display device 100. At this point, the display device 100 can change the broadcast channel on which a broadcast signal is received, according to the control signal received from the user terminal 500.

For example, when an input for operating a touch pad included in a second object 1331 is received, the user terminal 500 can transmit a control signal corresponding to a movement of the remote control device 200 to the display device 100. At this point, the display device 100 can change the position of the pointer 205 displayed through the display 180 according to the control signal received from the user terminal 500.

The user can select an object 1400, corresponding to text entry, output on the display 180 of the display device 100 by manipulating the pointer 205 using the remote control device 200 and/or the user terminal 500. At this point, the display device 100 can determine that a user input corresponding to use of a virtual keyboard is received based on the input for selecting the object 1400 corresponding to text entry.

Referring back again to FIG. 9, in operation S903, the display device 100 can determine whether remote control using the user terminal 500 is being performed. For example, when a remote control application is executed on a portable terminal 500 and a control signal is transmitted to the display device 100, the display device 100 can operate in remote control mode. At this point, the display device 100 can determine that remote control is being performed using the user terminal 500, while operating in remote control mode.

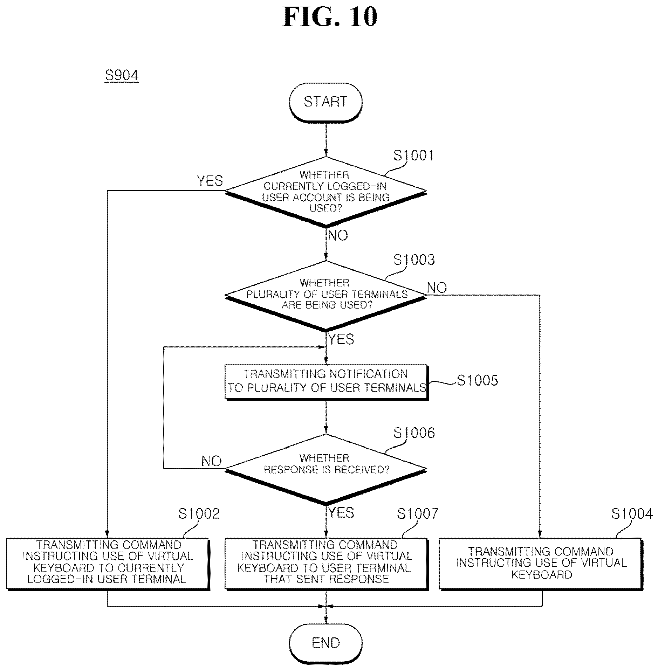

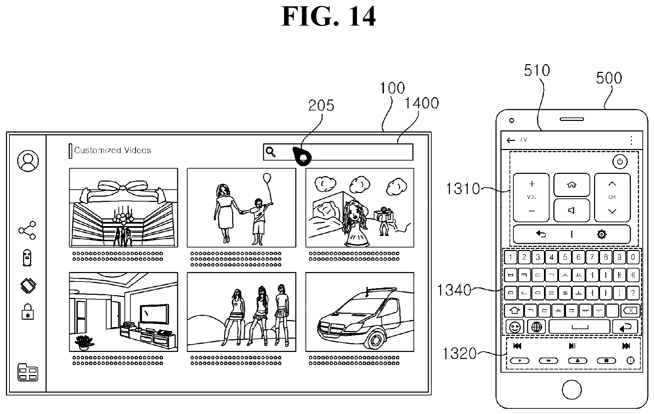

In operation S904, the display device 100 can transmit a command instructing use of a virtual keyboard to the user terminal 500 based on the remote control being performed using the user terminal 500. For example, referring to FIG. 14, the user terminal 500 that has received the command instructing use of a virtual keyboard can output an object 1340 corresponding to a virtual keyboard on a display 510. In this regard, an explanation will be given with reference to FIG. 10.

Referring to FIG. 10, in operation S1001, the display device 100 can determine whether the user terminal 500 associated with a user account currently logged into the server 400 is being used for remote control of the display device 100. For example, a user can log into the server 400 using the user account by entering the ID and password linked with the user account into the display device 100. At this point, the display device 100 can compare information on the user terminal 500 associated with the user account logged into the server 400 with information on the user terminal 500 used for remote control of the display device 100 to determine whether the user terminal 500 associated with the logged-in user account is being used for remote control.

In operation S1002, when the user terminal 500 associated with the user account currently logged into the server 400 is being used for remote control, the display device 100 can transmit a command instructing use of a virtual keyboard to that user terminal 500. In operation S1003, when the user terminal 500 associated with the user account currently logged into the server 400 is not being used for remote control, the display device 100 can determine whether a plurality of user terminals 500 are being used for remote control of the display device 100.

In operation S1004, when one user terminal 500 is being used for remote control of the display device 100, the display device 100 can transmit a command instructing use of a virtual keyboard to the user terminal 500 that is being used for remote control. In operation S1005, when the plurality of user terminals 500 are being used for remote control of the display device 100, the display device 100 can transmit a notification regarding use of a virtual keyboard to the plurality of user terminals 500 that is being used for remote control.

In operation S1006, the display device 100 can determine whether a response to the notification regarding use of a virtual keyboard is received from at least one of the plurality of user terminals 500 being used for remote control. In operation S1007, in response to receiving the response to the notification regarding use of a virtual keyboard, the display device 100 can transmit a command instructing use of the virtual keyboard to the user terminal 500 transmitting the response. At this point, when responses are received from two or more of the plurality of user terminals 500, the display device 100 can transmit a command instructing use of a virtual keyboard to the user terminal 500 that first sent the response.

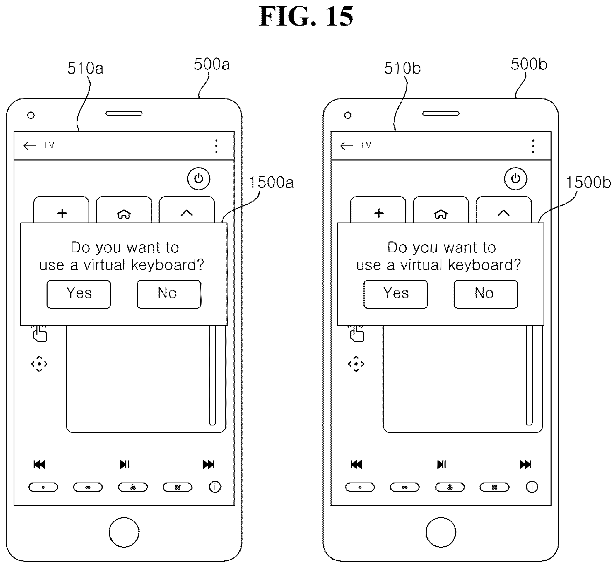

Referring to FIG. 15, when the display device 100 transmits a notification regarding use of a virtual keyboard to a plurality of user terminals 500a and 500b being used for remote control, the plurality of user terminals 500a and 500b can output screens 1500a and 1500b, each including a message asking whether to use the virtual keyboard, on displays 510a and 510b based on reception of a notification regarding use of a virtual keyboard.

At this point, since the plurality of user terminals 500a and 500b are remotely controlling the display device 100 by executing a remote control application, the screens 1500a and 1500b, each including a message asking whether to use a virtual keyboard, can be output as a pop-up screen on a remote control screen.

Referring back again to FIG. 9, in operation S905, the display device 100 can activate a virtual interface associated with an input device. Here, the virtual interface can refer to an interface implemented as a virtual device that is configured and created in software by using the resources of the display device 100. In the present disclosure, a description is given based on a virtual Human Interface Device (HID) related to a keyboard.

According to an embodiment, the display device 100 can have a virtual interface created and installed in the BSP (Board Support Package)/HAL (Hardware Abstraction Layer) layer of the webOS. When the virtual interface installed in the BSP layer of the webOS is activated, the display device 100 can operate as if a keyboard is connected via an external device interface 135 or a wireless communication interface 173. For example, the display device 100 can disable the output of the virtual keyboard through the display 180 in response to the activation of the virtual interface. For example, the display device 100 can output the virtual keyboard through the display 180 in response to deactivation of the virtual interface.

According to an embodiment, the display device 100 can activate a virtual interface in response to transmission of a command instructing use of the virtual keyboard to the user terminal 500. According to an embodiment, the display device 100 can activate the virtual interface in response to receiving a response from the user terminal 500 to the command instructing use of the virtual keyboard. For example, in response to receiving the command instructing use of the virtual keyboard, the user terminal 500 can output the object 1340 corresponding to the virtual keyboard through the display 510. At this point, the user terminal 500 can transmit a response to the command instructing use of the virtual keyboard to the display device 100 in response to the output of the object 1340 corresponding to the virtual keyboard through the display 510.

In operation S906, the display device 100 can determine whether a user input related to the termination of the virtual keyboard is received. Here, the user input related to the termination of a virtual keyboard can mean a user input related to ending text entry. For example, the user input related to the termination of the virtual keyboard can include an input for completing text entry, an input for controlling power on/off, an input for changing a broadcast channel, an input for executing a predetermined application, an input for activating a voice recognition function, etc.

In operation S907, the display device 100 can determine whether a key code is received from the user terminal 500. Here, the key code can be a value corresponding to each of multiple keys included in the keyboard. In operation S908, the display device 100 can verify an input corresponding to the key code received from the user terminal 500. For example, the display device 100 can verify a character, number, symbols, function, or the like corresponding to the key code received from the user terminal 500.

According to an embodiment, the display device 100 can receive information about a language type along with the key code from the user terminal 500. At this point, the display device 100 can determine an input corresponding to the key code based on the information about the language type received from the user terminal 500. For example, if the language type is Korean, the character corresponding to the predetermined key code can be ' 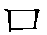 '; and if the language type is English, the character corresponding to the predetermined key code can be 'a'.

In operation S909, the display device 100 can perform an operation related to the virtual keyboard based on the input corresponding to the key code. For example, the display device 100 can determine a string corresponding to the key code received from the user terminal 500. At this point, the display device 100 can output text corresponding to the determined string on the display 180.

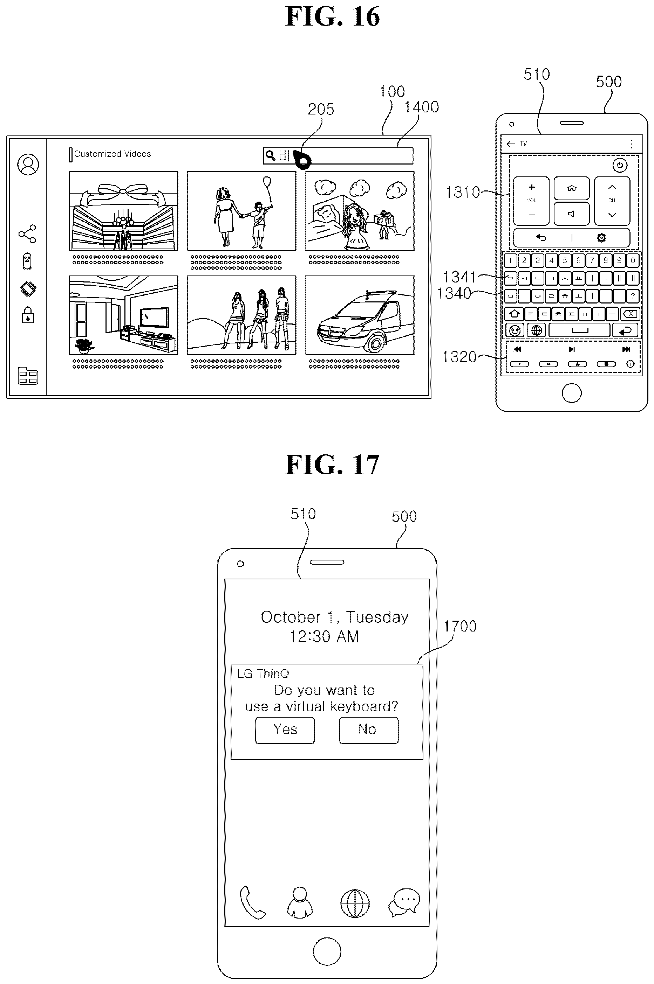

Referring to FIG. 16, when a user selects one of the keys included in the object 1340 corresponding to the virtual keyboard output on the display 510 of the user terminal 500, the user terminal 500 can transmit a key code corresponding to the key selected by the user to the display device 100. The display device 100 can display a predetermined character on the object 1400 corresponding to text entry, in response to the input corresponding to the key code received from the user terminal 500 being a predetermined character.

That is, whenever a user input for selecting a key included in the object 1340 corresponding to the virtual keyboard is received, the user terminal 500 can transmit a key code corresponding to the key selected by the user to the display device 100. In addition, the display device 100 can output text through the display 180 based on a character string corresponding to the key code received from the user terminal 500.

According to an embodiment, when a key code is received from the user terminal 500, the key code can be transmitted to LSM via Luna-service Bus. LSM can pass the key code to a framework that processes key codes (e.g., Maliit). The framework that processes key codes can determine a string corresponding to the key code received from a Luna surface manager (LSM) and pass the string to the LSM. The LSM can transmit the string determined in the framework to an application corresponding to a screen output on the display 180. Through the above process, the display device 100 can determine a character string corresponding to a key code and output text corresponding to the character string on the display 180.

Referring back again to FIG. 9, in operation S910, the display device 100 can deactivate the virtual interface when a user input related to the termination of the virtual keyboard is received. At this point, the display device 100 can transmit a command to disable the use of the virtual keyboard. The user terminal 500 can disable the output the object corresponding to the virtual keyboard in response to receiving the command to disable the use of the virtual keyboard.

In operation S911, the display device 100 can perform an operation according to a user input. For example, the display device 100 can turn off the power of the display device 100 based on the reception of an input for controlling power on/off. For example, the display device 100 can execute a predetermined application based on the reception of an input for executing a predetermined application, and output a screen corresponding to the predetermined application on the display 180.

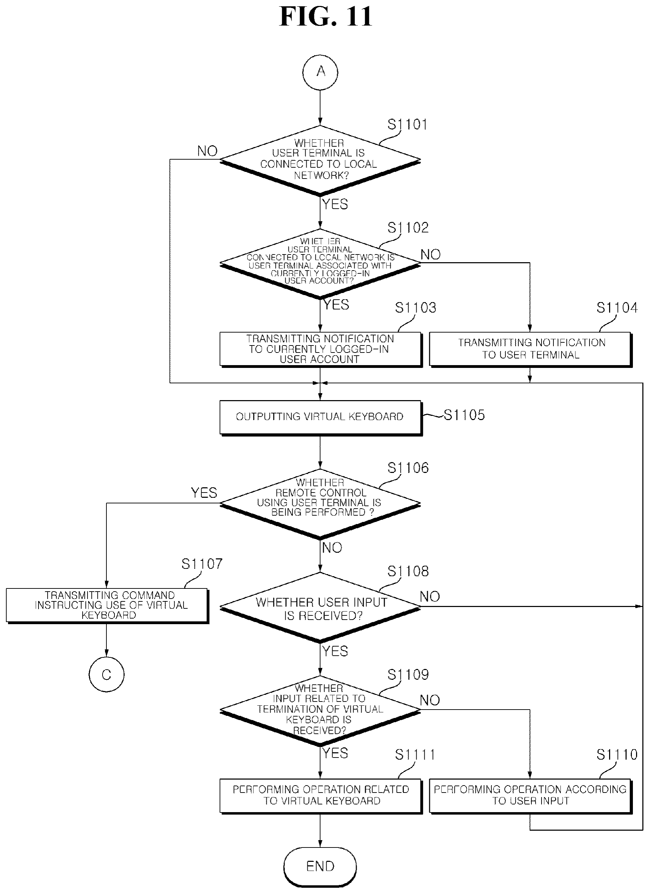

Meanwhile, when a key code received from the user terminal 500 corresponds to the enter key, the display device 100 can determine that a user input related to termination of the virtual keyboard is received. The display device 100 can output the virtual keyboard through the display 180 based on the fact that remote control using the user terminal 500 is not being performed. In this regard, an explanation will be given with reference to FIG. 11.

Referring to FIG. 11, in operation S1101, if remote control using a user terminal 500 is not being performed, the display device 100 can determine whether at least one user terminal 500 is connected to a local network via the router 600. In operation S1102, when the at least one user terminal 500 is connected to a local network, the display device 100 can determine whether the at least one user terminal 500 connected to the local network is a user terminal 500 associated with a user account currently logged into the server 400.

In operation S1103, when the user terminal 500 associated with the user account currently logged into the server 400 is connected to the local network, the display device 100 can transmit a notification regarding use of a virtual keyboard to the user terminal 500 associated with the user account currently logged into the server 400. Meanwhile, in operation S1104, when the user terminal 500 associated with the user account currently logged into the server 400 is not connected to the local network, the display device 100 can transmit the notification regarding use of a virtual keyboard to the user terminal 500 connected to the local network.

Referring to FIG. 17, when the display device 100 transmits the notification regarding use of a virtual keyboard to the user terminal 500 connected to the local network, the user terminal 500 can output, on the display 510, a screen 1700 including a message asking whether to use a virtual keyboard, based on the reception of the notification regarding the virtual keyboard. At this point, since the user terminal 500 is not being used for remote control of the display device 100, the screen 1700 including the message asking whether to use a virtual keyboard can be output as a pop-up screen on a screen currently being displayed on the display 510.

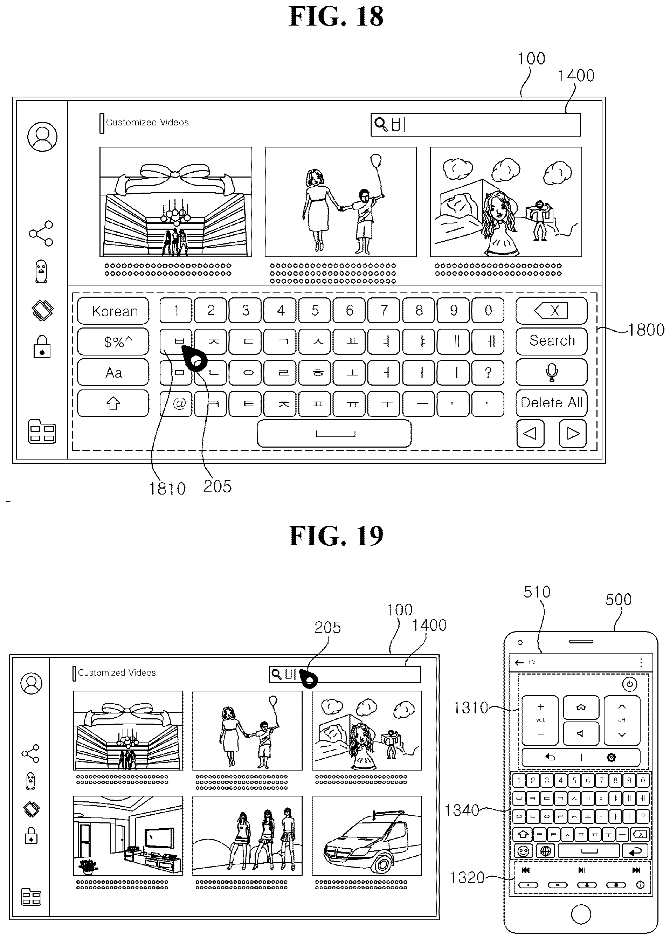

Referring back again to FIG. 11, in operation S1105, the display device 100 can output a virtual keyboard through the display 180. For example, referring to FIG. 18, the display device 100 can output a virtual keyboard 1800 through a portion of the screen output on the display 180. At this point, the content displayed on the screen output on the display 180 can be covered by the virtual keyboard 1800. Meanwhile, the user can use the remote control device 200 to select a predetermined key 1810 corresponding to a predetermined character included in the virtual keyboard 1800 shown on the display 180. At this point, in response to selection of the predetermined key 1810 corresponding to the predetermined character included in a virtual keyboard 1800, the display device 100 can display the predetermined character on the object 1400 corresponding to text entry.

In operation S1106, the display device 100 can determine whether remote control using a user terminal 500 is being performed. For example, in response to execution of the remote control application, the user terminal 500 can transmit a remote control signal to the display device 100. At this point, based on the reception of the remote control signal received from the user terminal 500, the display device 100 can determine that remote control using the user terminal 500 is being performed.

In operation S1107, based on the remote control being performed using the user terminal 500, the display device 100 can transmit a command instructing use of a virtual keyboard to the user terminal 500. For example, referring to FIG. 19, the user terminal 500 that has received a command instructing use of a virtual keyboard can output the object 1340 corresponding to the virtual keyboard through the display 510. At this point, a predetermined character for the object 1400 corresponding to text entry, which is included in the screen output on the display 180, can be kept displayed.

Meanwhile, in operation S1108, the display device 100 can determine whether a user input is received. For example, the display device 100 can receive a user input from the remote control device 200 while remote control using the user terminal 500 is not being performed. In operation S1109, when a user input is received, the display device 100 can determine whether the user input is related to the termination of the virtual keyboard. For example, when a user input is received that selects an area outside of the virtual keyboard 1800 displayed on the screen output on the display 180 using the pointer 205, the display device 100 can determine that a user input related to the termination of the virtual keyboard is received.

In operation S1110, when the received user input is not a user input related to the termination of the virtual keyboard, the display device 100 can perform an operation related to the virtual keyboard. Meanwhile, in operation S1111, the display device 100 can perform an operation according to the user input when the received user input is a user input related to the termination of the virtual keyboard. At this point, the display device 100 can disable the output the virtual keyboard through the display 180.

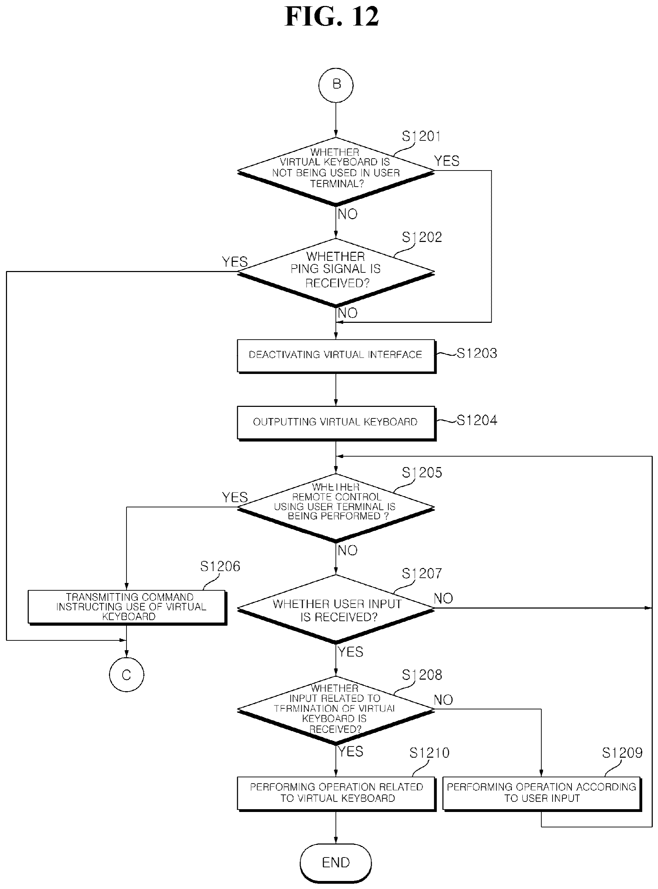

Meanwhile, when the user input related to the termination of the key code and the virtual keyboard is not received while the virtual interface is activated, the display device 100 can determine whether to output the virtual keyboard through the display 180. In this regard, an explanation will be given with reference to FIG. 12.

Referring to FIG. 12, in operation S1201, the display device 100 can determine whether the virtual keyboard is not being used at the user terminal 500. For example, the display device 100 can determine that the virtual keyboard is not being used at the user terminal 500 based on the reception of a signal corresponding to non-use of the virtual keyboard from the user terminal 500. For example, the display device 100 can determine whether the virtual keyboard is not being used at the user terminal 500 based on a signal received from the server 400 regarding a status of the user terminal 500.

According to an embodiment, the user terminal 500 can transmit a signal corresponding to non-use of the virtual keyboard to the display device 100. For example, when the output of an object corresponding to a virtual keyboard through the display 510 is disabled, the user terminal 500 can transmit a signal corresponding to the non-use of the virtual keyboard to the display device 100. For example, when the execution of a remote control application is terminated, the user terminal 500 can transmit a signal corresponding to non-use of the virtual keyboard to the display device 100. For example, when the output of a remote control screen through the display 510 is disabled, the user terminal 500 can transmit a signal corresponding to non-use of the virtual keyboard to the display device 100.

In operation S1202, the display device 100 can determine whether a ping signal is received from the user terminal 500. Here, the ping signal can refer to a signal indicating that the user terminal 500 is executing a remote control application to perform remote control on the display device 100. According to an embodiment, the user terminal 500 can transmit a ping signal to the display device 100 at a predetermined cycle while the object corresponding to a virtual keyboard is output on the display 510. At this point, the display device 100 can monitor whether a ping signal is received from the user terminal 500 while the virtual interface is activated.

In operation S1203, the display device 100 can deactivate the virtual interface when the virtual keyboard is not being used at the user terminal 500 and/or when a ping signal is not received. In operation S1204, the display device 100 can output the virtual keyboard through the display 180.

In operation S1205, the display device 100 can determine whether the virtual keyboard is being used at the user terminal 500. For example, the display device 100 can determine that the virtual keyboard is not being used at the user terminal 500 based on the reception of a signal corresponding to use of the virtual keyboard from the user terminal 500.

According to an embodiment, the user terminal 500 can transmit a signal corresponding to use of the virtual keyboard to the display device 100. For example, when the user terminal 500 outputs an object corresponding to a virtual keyboard through the display 510, the user terminal 500 can transmit a signal corresponding to use of the virtual keyboard to the display device 100. For example, when a remote control application is executed, the user terminal 500 can transmit a signal corresponding to use of a virtual keyboard to the display device 100. For example, when the user terminal 500 outputs a remote control screen through the display 510, the user terminal 500 can transmit a signal corresponding to use of the virtual keyboard to the display device 100.

In operation S1206, the display device 100 can transmit a command instructing use of the virtual keyboard to the user terminal 500 based on a state in which the virtual keyboard is being used at the user terminal 500. Meanwhile, the display device 100 can activate a virtual input interface in response to receiving a signal corresponding to use of a virtual keyboard from a user terminal 500.

Meanwhile, in operation S1207, the display device 100 can determine whether a user input is received. In operation S1208, when a user input is received, the display device 100 can determine whether the user input is related to the termination of the virtual keyboard.

In operation S1209, the display device 100 can perform an operation related to the virtual keyboard when the received user input is not a user input related to the termination of the virtual keyboard. Meanwhile, in operation S1210, the display device 100 can perform an operation according to the user input when the received user input is a user input related to the termination of the virtual keyboard. At this point, the display device 100 can disable the output the virtual keyboard through the display 180.

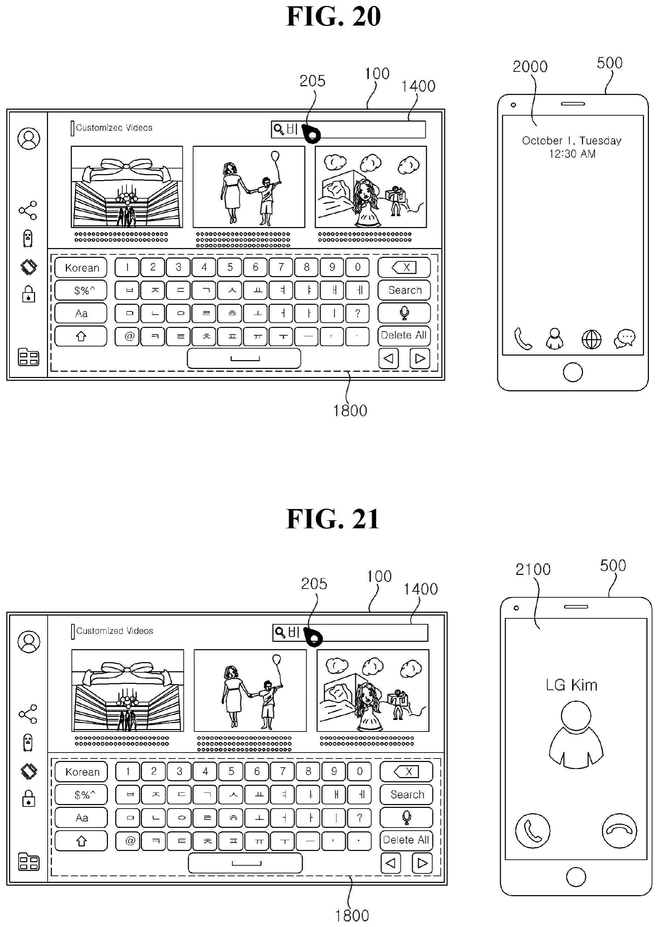

Referring to FIG. 20, while an object 1340 corresponding to a virtual keyboard is output on a display 510 of a user terminal 500, and a home screen 2000 is output on the display 510 of the user terminal 500, the user terminal 500 can transmit a signal corresponding to non-use of the virtual keyboard to a display device 100. At this point, the display device 100 can deactivate a virtual interface and output a virtual keyboard 1800 through a display 180 based on the reception of a signal corresponding to non-use of the virtual keyboard.

Referring to FIG. 21, when a call waiting screen 2100 is output on the display 510 of the user terminal 500 while the object 1340 corresponding to a virtual keyboard is output on the display 510 of the user terminal 500, the user terminal 500 can transmit a signal corresponding to non-use of the virtual keyboard to the display device 100. At this point, the display device 100 can deactivate a virtual interface and output a virtual keyboard 1800 through a display 180 based on the reception of a signal corresponding to non-use of the virtual keyboard.

As described above, according to at least one embodiment of the present disclosure, it is possible to provide a function for inputting text into a display device using a user terminal. Additionally, according to at least one embodiment of the present disclosure, it is possible to easily modify text displayed on a display device based on an input received from a user terminal. Additionally, according to at least one embodiment of the present disclosure, it is possible to minimize an amount of data used for text entry. Additionally, according to at least one embodiment of the present disclosure, it is possible to prevent content displayed on a screen of a display device from being covered by a virtual keyboard when text is input using a user terminal. Additionally, according to at least one embodiment of the present disclosure, in response to interruption of inputting text using a user terminal, it is possible for a display device to display a screen including a virtual keyboard to continue text input. Additionally, according to at least one embodiment of the present disclosure, it is possible to guide a user to use an optimal user terminal for text entry, and a system including the display device

Referring to FIGS. 1 to 21, a display device 100 according to one aspect of the present disclosure includes a display 180; a network interface 133; and a controller 170. The controller 170 can disable the output of a virtual keyboard through the display 180 in response to activation of a virtual input interface. While the virtual input interface is activated, the controller 170 can receive a key code from a specific user terminal 500 through a network interface 133, and display text through the display 180 based on a string corresponding to the received key code.

In addition, the controller 170 can activate the virtual input interface in response to receiving a first signal from the specific user terminal 500 corresponding to use of the virtual keyboard, and can deactivate the virtual input interface in response to receiving a second signal corresponding to non-use of the virtual keyboard from the specific user terminal 500.

Further, according to one aspect of the present disclosure, when use of the virtual keyboard is required while the virtual input interface is deactivated, the controller 170 can determine whether there is at least one first user terminal controlling the display device 100. When at least one first user terminal exists, the controller 170 can transmit a command instructing use of the virtual keyboard to one first user terminal corresponding to the specific user terminal 500 among the at least one first user terminals. When the at least one first user terminal does not exist, the controller 170 can output the virtual keyboard on the display 180.

The controller 170 can also activate the virtual input interface in response to transmission of the command instructing use of the virtual keyboard. Further, according to one aspect of the present disclosure, the controller 170 can activate the virtual input interface in response to receiving a response to the command instructing use of the virtual keyboard.

In addition, according to one aspect of the present disclosure, when the at least one first user terminal exists, the controller 170 can determine whether a second user terminal associated with an account logged into a server via the network interface 133 exists among the at least one first user terminal. When the second user terminal exists, the controller 170 can determine the second user terminal as the specific user terminal 500. When the second user terminal does not exist, the controller 170 can determine one of the first user terminals as the specific user terminal 500.

When the second user terminal does not exist, when there is only one first user terminal, the controller 170 can determine the first user terminal as the specific user terminal 500. If there are two or more first user terminals. When there is a plurality of first user terminals, the controller 170 can transmit a notification regarding use of the virtual keyboard to the plurality of first user terminals and determine a first user terminal transmitting a response to the notification among the plurality of first users as the specific user terminal 500.

Further, according to one aspect of the present disclosure, when the second user terminal does not exist, the controller 170 can log into the server using the account corresponding to the first user terminal determined as the specific user terminal 500. Further, according to one aspect of the present disclosure, while the virtual input interface is activated, the controller 170 can maintain the virtual input interface in an activated state in response to receiving a third signal indicating a communication status from the specific user terminal 500 and can deactivate the virtual input interface in response to failing to receive the third signal.

Also, the display device 100 can further include a user input interface 150. When the virtual input interface is activated, the controller 170 can deactivate the virtual input interface based on reception of an input unrelated to the virtual keyboard through at least one of the network interface 133 and the user input interface 150, and transmit a command to disable the use of the virtual keyboard to the specific user terminal 500. When the virtual input interface is deactivated and the virtual keyboard is output on the display 180, the controller 170 can disable the output of the virtual keyboard.

When the first user terminal does not exist, the controller 170 can determine whether there is at least one third user terminal connected to a local area network. When there is at least one third user terminal, the controller 170 can transmit a notification regarding use of the virtual keyboard to the at least one third user terminal.

**In** addition, when there is at least one third user terminal, the controller 170 can determine whether a fourth user terminal inked with an account logged into the server through the network interface 133 exists among the at least one third user terminals. When the fourth user terminal exists, the controller 170 can transmit a notification regarding use of the virtual keyboard to the at least one third user terminal. When the fourth user terminal does not exist, the controller 170 can transmit a notification regarding use of the virtual keyboard to the at least one third user terminal.

According to one aspect of the present disclosure, the received key code can be transmitted to the Luna Surface Manager (LSM) through a Luna-service Bus. The LSM can transmit the received key code to a predetermined framework processing a key code, receive a string corresponding to the received key code from the predetermined framework, and transmit the string received from the predetermined framework to an application corresponding to a screen output through the display.

A system according to an aspect of the present disclosure includes the display device 100 and at least one user terminal 500. The display device 100 can disable the output of a virtual keyboard through the display 180 in response to activation of a virtual input interface; receive a key code from a specific user terminal 500 when the virtual input interface is activated; based on a string corresponding to the key code, displaying text through the display 180. The specific user terminal 500 can output the virtual keyboard through a second display device 100 of the specific user terminal 500, and transmit the key code corresponding to the virtual keyboard to the display device 100.

Further, according to one aspect of the present disclosure, the specific user terminal 500 can transmit a first signal corresponding to use of the virtual keyboard to the display device 100 in response to the output of the virtual keyboard on the second display 180; and transmit a second signal corresponding to non-use of the virtual keyboard to the display device 100 in response to disabling of the output of the virtual keyboard through the second display 180. The display device 100 can activate the virtual input interface in response to receiving the first signal from the specific user terminal 500; and deactivate the virtual input interface in response to receiving the second signal from the specific user terminal 500.

Further, according to one aspect of the present disclosure, when use of the virtual keyboard is required while the virtual input interface is deactivated, the display device 100 can determine whether there is at least one first user terminal controlling the display device 100. When at least one first user terminal exists, the controller 170 can transmit a command instructing use of the virtual keyboard to one first user terminal corresponding to the specific user terminal 500 among the at least one first user terminals. When the at least one first user terminal does not exist, the controller 170 can output the virtual keyboard on the display 180. The specific user terminal 500 can output the virtual keyboard through the second display in response to receiving a command instructing use of the virtual keyboard.

Further, according to one aspect of the present disclosure, the display device 100 can activate the virtual input interface in response to transmission of the command instructing use of the virtual keyboard. Further, according to one aspect of the present disclosure, the specific user terminal 500 can output the virtual keyboard through the second display in response to receiving a command instructing use of the virtual keyboard, and transmitting a response to a command instructing use of the virtual keyboard to the display device, in response to the output of the virtual keyboard through the virtual second display 180. The display device 100 can activate the virtual input interface in response to receiving a response to the command instructing use of the virtual keyboard.

Further, according to one aspect of the present disclosure, when at least one first user terminal exists, the display device 100 can determine whether a second user terminal associated with an account logged into the server through the display device exists among the at least one first user terminal. When the second user terminal exists, the display device 100 can determine the second user terminal as the specific user terminal. When the second user terminal does not exist, the display device 100 can determine one of the at least one first user terminal as the specific user terminal.

Further, according to one aspect of the present disclosure, in a case where the second user terminal does not exist, when there is only one first user terminal, the display device 100 can determine the first user terminal as the specific user terminal 500. If there are two or more first user terminals. When there is a plurality of first user terminals, the display device 100 can transmit a notification regarding use of the virtual keyboard to the plurality of first user terminals and determine a first user terminal transmitting a response to the notification among the plurality of first users as the specific user terminal 500.

In addition, according to one aspect of the present disclosure, the specific user terminal 500 can transmit a third signal indicating a communication status about the specific user terminal to the display device 100 while the virtual keyboard is output on the second display. While the virtual input interface is activated, the display device 100 can maintain the virtual input interface in an activated state in response to receiving the third signal from the specific user terminal, and can deactivate the virtual input interface in response to failing to receive the third signal from the specific user terminal 500.

The accompanying drawings are provided only for a better understanding of the embodiments disclosed in the present specification and are not intended to limit technical ideas disclosed in the present specification. Therefore, it should be understood that the accompanying drawings include all modifications, equivalents and substitutions within the scope and sprit of the present invention.

Meanwhile, an operating method of the present disclosure can be implemented as a processor-readable code on a processor-readable recording medium. A processor-readable recording medium can include any type of recording device in which data is stored in a processor-readable manner. Examples of the processor-readable recording medium include a ROM, a RAM, a CD-ROM, a magnetic tape, a floppy disc, an optical data storage, and can include a carrier wave, such as data transmission through the Internet. Additionally, the processor-readable recording medium can be distributed over a plurality of computer systems connected to a network so that a processor-readable code is written thereto and executed therefrom in a decentralized manner.

While the present disclosure has been shown and described with reference to the preferred embodiments thereof, it should be understood that the present disclosure is not limited to the aforementioned specific embodiments, and various modifications and variations can be made by those skilled in the art without departing from the scope and spirit of the present disclosure as defined by the appended claims, and the modified implementations should not be construed independently of the technical idea or prospect of the present disclosure.

## Claims

1. A display device (100) comprising
a display (180);
a network interface (133); and
a controller (170) configured to:
display an input window on the display (180) for inputting information,
display a virtual keyboard on the display (180) for inputting information into the input window,
receive an input signal from a first user terminal indicating activation of a virtual keypad on the first user terminal,
in response to detecting the first user terminal being used to control the display device (100), disable display of the virtual keyboard on the display (180),
receive a key code from the first user terminal through the network interface (133), the key code being converted to a selected key on the virtual keypad of the first user terminal, and
display text in the input window displayed on the display (180) corresponding to the received key code.

2. The display device (100) of claim 1, wherein the controller (170) is further configured to:
in response to detecting the virtual keyboard of the first user terminal being used to control the display device (100), disable the display of the virtual keyboard on the display (180),

3. The display device (100) of claim 1, wherein the controller (170) is further configured to:
activate a virtual interface on the display device (100) interfacing the virtual keypad on the first user terminal, in response to receiving the input signal from the first user terminal indicating activation of the virtual keypad on the first user terminal.

4. The display device (100) of claim 3, wherein the controller (170) is further configured to:
determine the virtual keyboard on the first user terminal is idle, and
deactivate the virtual input interface on the display device (100) in response to determining the virtual keyboard on the first user terminal is idle.

5. The display device (100) of claim 3, wherein the controller (170) is further configured to:
determine the first user terminal is controlling the display device (100), and
in response to determining the virtual interface is not activated, activate the virtual input interface.

6. The display device (100) of claim 1, wherein the controller (170) is further configured to:
determine a second user terminal is wirelessly connected with the display device (100),
determine the first user terminal and the second user terminal are associated with an account logged into a server associated with the display device (100) through the network interface (133), and
when the first user terminal is determined to be logged into the account and the second user terminal is determined not to be logged into the server, the first user terminal is allowed to control the display device (100).

7. The display device (100) of claim 6, wherein the controller (170) is further configured to:
determine the first user terminal and a second user terminal are authorized to control the display device (100),
determine the first user terminal is not wirelessly connected with the display (180), and
switch the user account controlling the display device (100) to the second user terminal.

8. The display device (100) of claim 6, wherein the server is configured to:
transmit the received key code to a predetermined framework processing a key code,
receive a string corresponding to the received key code from the predetermined framework, and
transmit the string received from the predetermined framework to an application corresponding to a screen output through the display (180).

9. A non-transitory computer readable medium storing instructions that when executed by a processor, causes the processor to execute the following:
displaying an input window on a display (180) for inputting information;
displaying a virtual keyboard on the display (180) for inputting information into the input window;
receiving an input signal from a first user terminal indicating activation of a virtual keypad on the first user terminal;
in response to detecting the first user terminal being used to control the display (180), disabling display of the virtual keyboard on the display (180);
receiving a key code from the first user terminal through the network interface (133), the key code being converted to a selected key on the virtual keypad of the first user terminal; and
displaying text in the input window displayed on the display (180) corresponding to the received key code.

10. The non-transitory computer readable medium of claim 9, wherein the processor further executes the following:
in response to detecting the virtual keyboard of the first user terminal being used to control the display device (100), disabling the display of the virtual keyboard on the display (180),

11. The non-transitory computer readable medium of claim 9, wherein the processor further executes the following:
activating a virtual interface on the display (180) interfacing the virtual keypad on the first user terminal, in response to receiving the input signal from the first user terminal indicating activation of the virtual keypad on the first user terminal.

12. The non-transitory computer readable medium of claim 9, wherein the processor further executes the following:
determining the virtual keyboard on the first user terminal is idle; and
deactivating the virtual input interface on the display device (100) in response to determining the virtual keyboard on the first user terminal is idle.

13. The non-transitory computer readable medium of claim 9, wherein the processor further executes the following:
determining the first user terminal is controlling the display (180); and
in response to determining the virtual interface is not activated, activating the virtual input interface.

14. The non-transitory computer readable medium of claim 9, wherein the processor further executes the following:
determining a second user terminal is wirelessly connected with the display (180);
determining the first user terminal and the second user terminal are associated with an account logged into a server associated with the display (180) through the network interface (133); and
when the first user terminal is determined to be logged into the account and the second user terminal is determined not to be logged into the server, the first user terminal is allowed to control the display (180).

15. The non-transitory computer readable medium of claim 14, wherein the processor further executes the following:
determining the first user terminal and a second user terminal are authorized to control the display (180);
determining the first user terminal is not wirelessly connected with the display (180); and
switch the user account controlling the display (180) to the second user terminal.
